(19)

Europäisches Patentamt

European Patent Office

Office européen des brevets

(11) **EP 4 685 459 A1**

(12) **EUROPEAN PATENT APPLICATION**

(43) Date of publication:
**28.01.2026 Bulletin 2026/05**

(21) Application number: **24190595.9**

(22) Date of filing: **24.07.2024**

(51) International Patent Classification (IPC):
**G01N 15/01** (2024.01)      **G01N 15/1433** (2024.01)
**G01N 15/1434** (2024.01)      **G01N 15/14** (2024.01)
**G01N 15/10** (2024.01)

(52) Cooperative Patent Classification (CPC):
**G01N 15/1434; G01N 15/01; G01N 15/1433;**
**G01N 15/147;** G01N 2015/016; G01N 2015/1006;
G01N 2015/1402; G01N 2015/1454

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Max-Planck-Gesellschaft zur**
**Förderung der**
**Wissenschaften e.V.**
**80539 München (DE)**

(72) Inventors:
• **HOFEMEIER ABU HATTUM, Shada**
**91058 Erlangen (DE)**

• **GUCK, Jochen**
**91058 Erlangen (DE)**
• **KIM, Kyoohyun**
**91058 Erlangen (DE)**
• **O'CONNELL, Eoghan**
**91058 Erlangen (DE)**
• **MÜLLER, Paul**
**91058 Erlangen (DE)**

(74) Representative: **Hoffmann Eitle**
**Patent- und Rechtsanwälte PartmbB**
**Arabellastraße 30**
**81925 München (DE)**

Remarks:
Amended claims in accordance with Rule 137(2)
EPC.

(54) **DEVICE FOR ANALYSING BODIES, METHOD THEREFOR AND APPARATUS AND METHOD**
**FOR SORTING BODIES**

(57)    The present invention relates a device for analysing bodies, preferably cells, suspended in a fluid, the device comprising: a microfluidic channel arranged for allowing the fluid containing the bodies to flow therethrough, an imaging means arranged so as to obtain optical information of the bodies as they are flowing through the channel, an analysis means which uses the optical information obtained by the imaging means to obtain a phase distribution map of the spatial distribution of the phase shift of light as it passes through the bodies.

Fig. 2

**Description**

<u>Technical Field</u>

The present invention relates to devices that are used for analysing bodies which are suspended in a fluid, in particular for refocusing images of such bodies. It also relates to a corresponding method as well as an apparatus and method for sorting bodies.

<u>Technical Background</u>

In a variety of fields of science such as biology and medicine, microfluidic devices are used for analysing cells, which can be human or animal cells as well as bacteria, archaea, plant cells and fungal cells. For such a use, the cells are first individualised and suspended in a fluid. Subsequently, the fluid containing those cells is led through a microfluidic channel.

Microfluidic channels typically have a diameter in the order of tens to hundreds of micrometres or, in the case of bacteria, yeast, ..., in the order of several microns, and can be defined as being channels within which frictional forces dominate over inertial forces. This means that the flow is characterised by a small Reynolds number which corresponds to a laminar flow with no or negligible turbulences.

The cells are led through the microfluidic channels in an individualized manner. In order to analyse the cells which are led through that channel, an imaging device, such as a microscope, is arranged so as to observe the cells as they travel through the channel. With that device, images are obtained, which can then be further analysed to obtain information as for the properties of the cells. For example, one can obtain their deformation, which can be correlated to the forces acting on them due to the flow to infer their mechanical properties, as, for example, explained in WO 2015/024690 A1. It is also possible to analyse the overall shape of the cells as well as their internal structure so that their morphology and the distribution of subcellular features can be characterized.

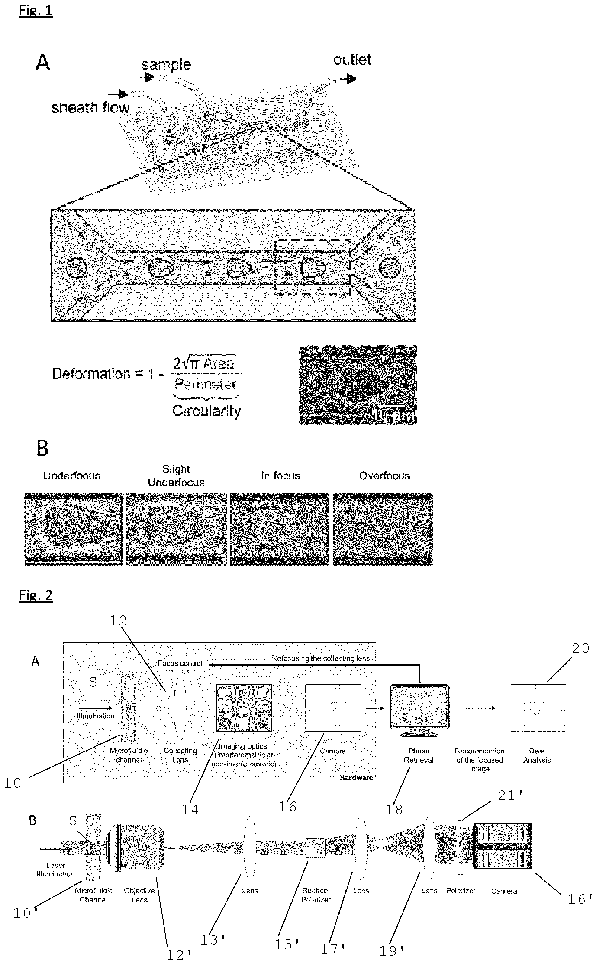

A set up to perform such an analysis is shown in Figure 1A. As can be seen from that figure, a microfluidic channel is provided where a sample is introduced through a dedicated sample inlet. To either side of the sample flow, a sheath flow is created, which serves for focusing the sample flow. The sample flow moves through the channel and is imaged, as is illustrated by the inset of the configuration shown in Figure 1A (which, together with Figure 1B, has been modified from Urbanska et al., Methods in Cell Biology 147, 175-198 (2018)). Here, the region dedicated by a dashed line is imaged and analysed in detail as a bright field image using an imaging device such as a camera or a microscope (not shown). Subsequently, the sample flow and the sheath flows are led out through the outlet to be either discarded or for further processing.

As can be seen from the Figure 1A, the sample, which could, in this case, be a biological cell, is deformed by the sample flow and assumes a shape somewhat similar to a rifle bullet (which occurs if the cells of the sample were, before deformation spherical - other types of cells such as red blood cells assume a different shape). The deformation of the cell can be quantified using the deformation parameter as defined in the bottom of Figure 1A, which can, in turn, be used to obtain mechanical properties of the cells, as was discussed earlier. For such and other types of analysis, the contour, the area, and the brightness of the cells is obtained.

Figure 1B illustrates some of the challenges encountered with the practical implementations of such devices. In order to determine the deformation of the cells, the cells need to be in focus. In turn, this means that the optics of the imaging means analysing the cells needs to be adjusted to the position of the cells within the channel. Since the cells are, however, flowing through the channel at some speed, the focusing needs to be very fast. Otherwise, the images will be either underfocused or overfocused, as illustrated in Fig. 1B. To obtain a clear image of the cells, such an underfocusing or overfocusing should be avoided, which thus means that, using conventional technology, the focus of the cells needs to be constantly adjusted. This is in particular of relevance because the sample flowing inside the channel will have an inherent distribution in axial position of the bodies (where the axis refers to the optical axis, which will generally be perpendicular to the flow direction of the channel) so that a fixed focus position will necessarily produce out of focus images for some of the bodies to be analysed. In addition, an operator may not focus the optics properly, and it may also be the case that two different operators focus somewhat differently if they are to analyse the same sample (or that the same operator may employ a slightly different focusing), which also affects the images that are obtained. Furthermore, there is also a focus shift which occurs due to sample size differences, mechanical vibrations, microfluidic chip thermal expansion, and flow instabilities, which leads to a focus drift.

All of these effects make it clear that in order to obtain a clear image of the bodies being imaged, a continuous refocusing is needed. This, however, requires, a rather complicated mechanics of the imaging device to move the optics relative to the channel. Further, given the inertia involved in such mechanics, one either needs to have a driving motor that is at the same time very powerful and also very precise, thus increasing costs, or one needs to slow down the sample flow, which reduces throughput.

A further challenge resides in the fact that in some circumstances, cells need to be distinguished which have a very similar appearance in a microscope image. This is in particular the case if the organelles and other structures inside the cells do not have a significant impact on the light travelling through the cells, which makes it difficult to distinguish between them in brightfield imaging. In particular, in some cases, cells such as the different types of lymphoid cells cannot be distinguished in an optical analysis based on the deformation as such or based on the images obtained of them when only imaging the amplitude of the electromagnetic waves of the light travelling through them. However, it would be desirable to obtain more information of such cells so as to allow better and more in-depth cell analysis.

Summary of the Invention

The present invention aims at solving or at least alleviating at least some of the issues mentioned previously.
The invention is defined by the independent claims, whilst preferred embodiments are set out in the dependent claims.
According to the invention, a device for analysing bodies is claimed. Whilst these bodies can be preferably cells such as cells from human or animal patients, bacteria, archaea, plant cells, and fungal cells, other types of bodies can also be envisaged such as droplets, spheres, hydrogel beads, etc. as well as mixtures of any of those bodies. If cells are used, they can be individualised or in aggregates.
Those bodies are suspended in a fluid which is used for leading them through a microfluidic channel. In that microfluidic channel, the bodies are preferably deformed by the fluid flow through the channel.
An imaging means is arranged so as to obtain optical information of the bodies as they are flowing through the channel. Such an imaging means can, for example, be a camera which is arranged, together with a magnifying optics, such as a microscope, so as to obtain image information of a section of the channel through which the sample flows. Preferably, the channel is illuminated with a collimated beam which is also incident on the bodies to be imaged. This beam can, in some cases, be a laser, but other kinds of light, including white light, can also be used. White light is particularly easy to generate whilst a laser is particularly advantageous for interferometric imaging. It is also possible to use low-coherence light sources such as superluminescent diodes (SLEDs, SLDs).
According to the invention, an analysis means is arranged which uses the optical information obtained by the imaging means to obtain a phase distribution map of the spatial distribution of the phase shift of light as it passes through the bodies. That is, the phase shift of the electromagnetic wave constituting the light that travels through the fluid and the bodies is measured. With such a phase shift, one can obtain more information as regards the internal structure of the bodies which would not be obtainable using an imaging technology that only obtains quantitative measures as for the amplitude of the electromagnetic wave of the light as it travels through the bodies. Accordingly, with a corresponding setup, more information can be obtained regarding the bodies which are flowing through the channel and are thus analysed, which makes such a flow cytometry method more useful for cell analysis, disease diagnosis, and drug screening.
In preferred embodiments, the device is arranged for carrying out quantitative phase imaging, preferably interferometric quantitative phase imaging, which can also be referred to as interferometric or non-interferometric holographic imaging. A way of implementing quantitative phase imaging is described in Park et al., "Quantitative phase imaging in biomedicine", Nature Photonics 12, p. 578-589 (2018) . With such a technology, it is possible to particularly reliably distinguish between cells which could not be distinguished using brightfield microscopy. Such a way of analysing the phase map is particularly useful in numerical refocusing, as will be discussed later. Quantitative phase imaging is also described in Bon et al., "Quadriwave lateral shearing interferometry for quantitative phase microscopy of living cells", Optics Express 17 (15) (2009), Bon et al., "Optical detection and measurement of living cell morphometric features with single-shot quantitative phase microscopy", Journal of Biomedical Optics 17(7) (2012), and Xiao et al., "Quantitative phase deformability cytometry for noninvasive high-throughput characterization of cells", View 2023;4:20220049.
In a preferred embodiment, the phase distribution map is used to obtain a focused optical image of the bodies. In that way, the image of the body can be numerically focused using the phase distribution map of the spatial distribution of the phase shift of the light, together with an intensity distribution of the image which is obtained. In turn, this allows for obtaining a focused image of the cells purely using computational means and without having to physically move the optics, which avoids the shortcomings mentioned earlier regarding physical movement of the optics. Thus, the data that are obtained are highly reliable and can be analysed at a high throughput speed. Various shape and texture features can be reliably obtained from such images, which can be analysed after the refocusing. This subsequent analysis does not necessarily have to occur in high throughput.
In preferred embodiments, the focused optical image is obtained using a Rayleigh-Sommerfeld propagator. The use of such a propagator is described in Lee and Grier, "Holographic microscopy of holographically trapped three-dimensional structures", Optics Express 15(4) p. 1505-1512 (2007), and Kim and Park, "Fourier transform light scattering angular spectroscopy using digital inline holography", Optics Letters 37(19) pp. 4161-4163 (2012). The use of such a propagator allows for an efficient numerical focusing of the image. It is, however, also envisaged to use machine learning computational methods instead of the Rayleigh-Sommerfeld propagator. It is, however, also envisaged to use other ways of numerical refocusing.

It is also preferred if the phase distribution map is used to obtain a dry mass density of the bodies or a dry mass. Such a dry mass density/dry mass allows for distinguishing samples having a similar size and mechanical properties but a different dry mass density. With that density/mass, further distinctions between cells and cell subpopulations are possible, as will also be evident below. This can be useful for comparing cell characteristics between healthy and diseased states in samples from the same patient or with a reference database and is thus of particular significance in diagnostics.

It is preferred if the imaging means is arranged to obtain the phase distribution map in real time as the bodies are flowing through the channel. Whilst it is also envisaged that the phase distribution map is obtained based on recorded images and thus not in real time as the bodies are flowing the channel, it is preferred if the phase distribution map is obtained in real time. This is preferential for diagnostic purposes, for example during surgeries where one can obtain relevant information during a surgery, rather than having to wait, and can respond appropriately. Furthermore, if the cells are to be treated subsequently, it is also preferred if the data are analysed in real time.

It is also preferred if all of the subsequent steps, such as the obtaining of a focused optical image or of a dry mass density/dry mass of the bodies, are also done whilst the bodies are flowing through the channel and hence in real time. This leads to the advantages mentioned previously.

According to another aspect of the present invention, an apparatus for sorting bodies is claimed. Such an apparatus comprises a device as previously defined, potentially in the preferred embodiments, together with a means for sorting the bodies according to the data obtained by the analysis means. With such an apparatus, the data that is obtained using the device can be for sorting cells, which can be beneficial for using such cells further.

Another aspect of the invention is the method of analysing bodies as claimed in claim 7. Such a method has the advantages recited earlier. The same applies to the preferred embodiments as defined in the subsequent dependent claims and to the claimed method of sorting bodies, which is another aspect of the present invention.

Brief Description of the Drawings

Figure 1 shows a prior art microfluidic device for analysing cells.

Figure 2 shows a device for analysing bodies according to a first embodiment (subfigure A) and according to a second embodiment (subfigure B).

Figure 3 shows a method according to an embodiment of the invention.

Figure 4 shows analysis results obtained using the present invention.

Figure 5 shows further analysis results obtained using the present invention.

Detailed Description of the Drawings

In the first embodiment which is shown in Figure 2A), which shows the underlying concept, light, indicated by an arrow, is incident on a microfluidic channel 10 which contains a body S to be imaged. The light which passes through the channel 10 is then collected using a collecting lens 12 which can be adjusted in its position. Downstream of the collecting lens 12, an imaging optics 14 is arranged which can be both interferometric and non-interferometric. The output from the imaging optics 14 is imaged by a camera 16 and then sent to a phase retrieval device 18 which controls the focus of the collecting lens 12 by means of axially moving it and which obtains a phase map. Based on, at least in parts, the phase map that is obtained, a focused image is reconstructed using the data analysis device 20. The details of such a non-interferometric imaging are set out in the article by Oh et al., "Non-interferometric stand-alone single-shot holographic camera using reciprocal refractive imaging", Nature Communications 14:4870 (2023). Further examples of such a technique are given in Baek et al., "White-light quantitative phase imaging unit", Optica 6 (45) (2019) (which describes Kramers-Kronig holographic imaging), transport-of-intensity equation (TIE, Phillips, K. et al., Phys. Rev. Lett. 109, 118105 (2012)), non-interferometric phase retrieval with diffraction grating patterns (J. Hao et al., Opt. Express 28, 25795-25805 (2020), J. Oh et al., Nat. Comm 14, 4870 (2023)), and single point phase imaging with optical phase conjugation (S. Shin et al., Phys. Rev. Applied 9, 044042 (2018)).

Figure 2B) shows an embodiment of hardware which uses a self-reference interferometric microscope and is thus a more specialised version of the concept illustrated in Figure 2A). The underlying technology of self-reference interferometric microscopy is illustrated in Fourier transform light scattering angular spectroscopy using digital inline holography", Optics Letters 37(19) pp. 4161-4163 (2012).

According to this embodiment, collimated laser light, as indicated by an arrow, which is emitted from a laser light source, such as a fiber coupled laser diode (not illustrated) illuminates a body S inside a microfluidic channel 10'. The body S is magnified using an objective lens array 12' arranged in a 4f-configuration which leads, in embodiments, to a magnification with a factor or 85, and the light output from the objective lens array 12' is then incident on the lens 13'. The light that is output from the lens 13' is sent to a Rouchon polariser 15' which splits up the light that passes through the lens 13' into the ordinary and extraordinary rays. Those two rays pass through the further lenses 17', 19' and are then incident on a polariser 21' before they interfere at the image plane and generate a spatially modulated hologram which is imaged by the camera 16'. This hologram is recorded at a frame rate of, in the present embodiment, 3000 Hz - however, this frame rate is non-limiting and could be chosen differently. In order to mitigate the motion blurring of the samples flowing inside the channel 10' with a high flow rate, the exposure time was reduced to 2 μs (which is, again, a non-limiting value) .

The thus obtained hologram is transformed to a phase map using a field retrieval algorithm based on a Fourier transform. In order to do so, firstly, the entire measured hologram is subjected to a Fourier transform. Subsequently, a region of interest is selected (for example using the Otsu thresholding method described in N. Otsu, "A Threshold Selection Method from Gray-Level Histograms", IEEE Trans. Syst. Man. Cybern. 9, 62-66 (1979)), which is then subjected to an inverse Fourier transform.

With such a setup, it is no longer necessary to move the objective lens 12', and the one can instead focus the image purely numerically using, for example, a Rayleigh-Sommerfeld propagator in quantitative phase imaging.

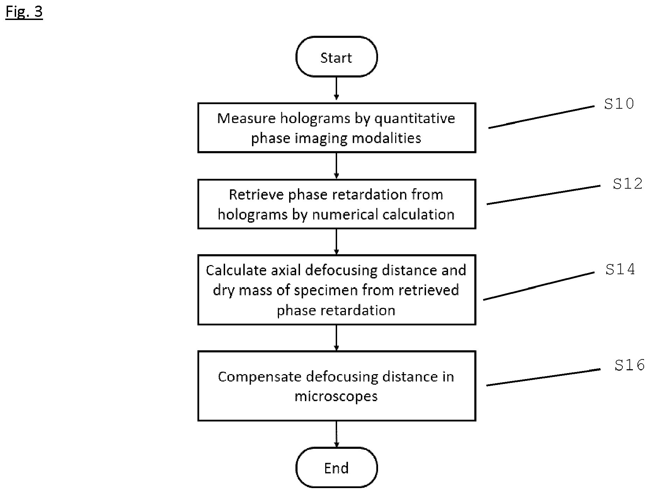

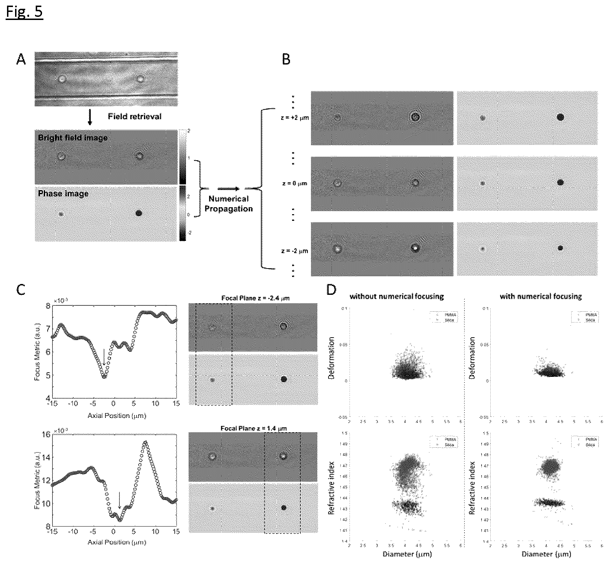

Figure 3 illustrates an embodiment of the inventive method. In a first step S10, a hologram is measured using quantitative phase imaging. From this hologram, the phase retardation/phase map is retrieved using a numerical calculation (step S12), as was described earlier with respect to Fig. 2. Subsequently, the axial defocusing distance is calculated, for example using a Rayleigh-Sommerfeld propagator (S14), as will be discussed in more detail with reference to Fig. 5. Alternatively, the dry mass of the specimen is calculated from the retrieved phase retardation. The refractive index, mass density and dry mass are evaluated as explained below:

The measured phase image, $\Delta\phi(x, y)$ is the integration of the difference between the refractive index of the sample, $n_c(x, y, z)$, and surrounding medium, $n_m$, along the optic axis as $\Delta\phi(x, y) =$

$$\frac{2\pi}{\lambda} \int [n_c(x, y, z) - n_m] dz = \frac{2\pi\alpha}{\lambda} \int C(x, y, z) dz$$

, where $C(x, y, z)$ is the dry mass density of the sample and $\alpha$ is the refractive index increment (dn/dc) with $\alpha$=0.190 mL/g for most proteins and nucleic acids and $\alpha$=0.145 mL/g for hemoglobin in red blood cells. Here, x and y are two orthogonal dimensions perpendicular to the optical axis of the imaging device, an z is the dimension along the optical axis of the imaging device. $\lambda$ is the wavelength of the incident light. The dry mass of the sample, m, can be calculated by two-dimensional summation of the measured phase image as

$$m = \iiint C(x, y, z) dx dy dz = \frac{\lambda}{2\pi\alpha} \iint \Delta\phi(x, y) dx dy$$

. Under the assumption that most cells in suspension exhibit spherical shape, the mean mass density, $\overline{C}$, of each sample can be calculated as

$$\overline{C} = \frac{m}{V} = \frac{\lambda}{2\pi\alpha V} \iint \Delta\phi(x, y) dx dy = \frac{\lambda}{2\pi\alpha \left[\frac{4\pi}{3}\left(\frac{A}{\pi}\right)^{3/2}\right]} \iint \Delta\phi(x, y) dx dy$$

, where V is the volume of the sample and A is the area measured from the measured phase image. It is to be noted that whilst the above explains referred to cells, they also equally apply to any other kind of body to be analysed. This method is also described in Bhaduri et al., "Diffraction phase microscopy with white light", Optics Letters 37 (6) (2012) .

Subsequently, the focusing distance is compensated in the microscope so that one can obtain a focused image (step S16), either by a physical adjustment of the imaging optics or numerically using backpropagation. This focused image can then, if desired, be analysed further, for example to obtain the deformation of the cells/bodies or in order to obtain further properties. Furthermore, one can also analyse the structure of the cells based on that image.

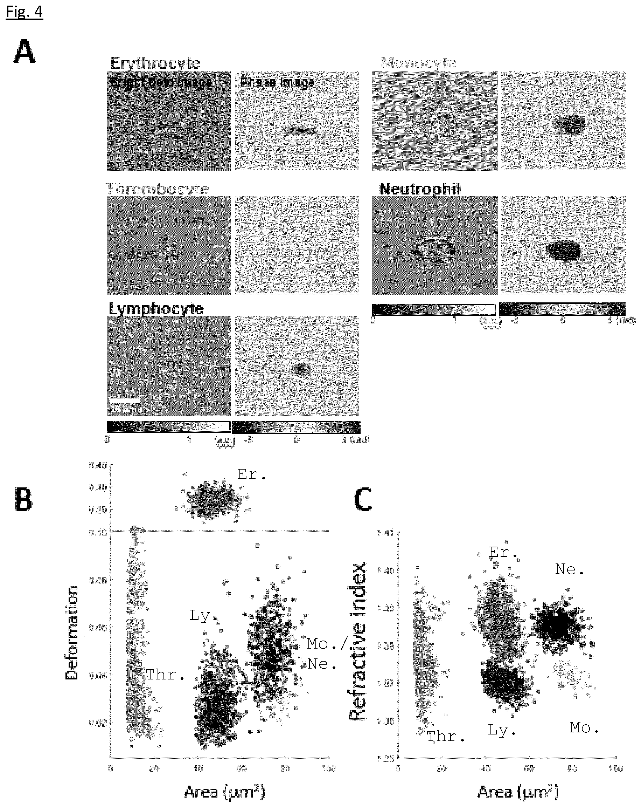

An example that illustrates the effect the obtaining of a phase map is shown in Figure 4. Here, in subfigure A, we see both bright field images (left) and phase images (right) of erythrocytes, thrombocytes, lymphocytes, monocytes, and neutrophiles, respectively.

In order to distinguish them, we note that in Figure 4, subfigure B, the deformation of the cells is shown as a function of their area. From this diagram, it can be seen that there are different cell populations, namely thrombocytes (Thr.), lymphocytes (Ly.), erythrocytes (Er.) and an undistinguishable population of monocytes (Mo.) and neutrophils (Ne.), as indicated by the abbreviations in the subfigure. From that subfigure, it is not possible to distinguish between the monocytes and the neutrophils.

Subfigure 4C, however, allows for further differentiation. This subfigure shows the refractive index as a function of the area of the cells, which corresponds to a phase map, as explained before. As can be seen from this subfigure, it is now possible to distinguish between the monocytes and the neutrophils, which form distinct populations. Since the refractive index n is related to the dry mass density C, as discussed before, measuring the refractive index is equivalent to measuring the dry mass density. It is hence clear from this figure that using the refractive index information, a further diagnostic tool can be obtained to realize that what appears, initially, as a single population contains several subpopulations, which may warrant further study. Thus, measuring the dry mass density as well as the dry mass allows for distinguishing samples having a similar size and mechanical properties but a different density and/or mass. This is valuable for comparing cell characteristics in healthy and diseased states from the same patient or a reference database.

Figure 5 shows the procedure for numerical focusing of the images which are obtained when imaging a mixture of two different types of beads in a fluid. Both types of beads have the same diameter ($4\mu$m) but they are made of different materials (PMMA and silica, respectively) and have different refractive indices (1.4945 and 1.4613, respectively). They are suspended in a 40% (w/w) sucrose solution.

Firstly, in step A, from a holographic image (top image), a bright field image and a phase map image are obtained.

Subsequently, as shown in subfigure B, the bright field and phase images are numerically propagated from the measured images to obtain images at different z-positions.

For numerical refocusing, an axial stack of optical fields at various distances was computed numerically by employing the Rayleigh-Sommerfeld backpropagation. Among the axial stack, the optical field of a sample at the focal plane was selected according to a specified focus criterion. The optical fields at arbitrary distances r from the optic axis, denoted as $E_z(r)$, were calculated by applying the convolution of the retrieved field at the camera plane, $E_0(r)$, with the Rayleigh-Sommerfeld propagator,

$$h_z(r) = -\frac{1}{2\pi}\frac{\partial}{\partial z}\frac{e^{ikR}}{R}$$

, as $E_z(r) = E_0(r) * h_z(r)$, where $*$ is the convolution operator, $R^2 = r^2 + z^2$ and $k = 2\pi n/\lambda$ is the wavenumber of light within a medium of refractive index n. This numerical propagation was efficiently conducted in the Fourier space as $E_z(q) = \mathcal{F}\{E_z(r)\} = \mathcal{F}\{E_0(r)\}H_z(q)$, where F represents the Fourier transformation and

$$H_z(q) = \exp\left(ikz\left[1 - \left(\frac{\lambda q}{2\pi n}\right)^2\right]^{1/2}\right)$$

is the Fourier transformation of the Rayleigh-Sommerfeld propagator. The axial stack of optical fields was generated, covering distances ranging from z = -10 um to 10 um with a step size of 0.2 um. By calculating the gradient of amplitude maps at the boundaries of each sample for each axial plane, the axial plane exhibiting the lowest gradient value was identified as the focal plane for obtained a focused image.

This is also illustrated in subfigure C. As can be seen from the left subfigures, for the different beads, different focal distances are used for an optimum image, which thus corresponds to the beads being arranged at different depths within the sample fluid. Thus, as shown in the right hand side, when one type of bead is in focus, the other type is out of focus.

Subsequently, as can be seen from Figure 5D, the refractive index information can distinguish two populations of beads having the same size but are made of different materials. By employing such a method, it becomes possible to compensate for focal drift and for an axial distribution of the bodies to be imaged without human intervention and, in some cases, numerically, which speeds up the method and allows for reliably obtaining focused images. It is possible to thus refocus the image at different stages, such as after the measurement by reconstructing the focused image or during the measurement by calculating the correct focal plan and controlling the hardware to compensate for the drift. This leads to an enhanced precision in extracting morphometric features of samples from images.

**Claims**

1. Device for analysing bodies, preferably cells, suspended in a fluid, the device comprising:

   - a microfluidic channel (10) arranged for allowing the fluid containing the bodies (S) to flow therethrough,
   - an imaging means (16, 16') arranged so as to obtain optical information of the bodies as they are flowing through the channel,
   - an analysis means (20) which uses the optical information obtained by the imaging means (16, 16') to obtain a phase distribution map of the spatial distribution of the phase shift of light as it passes through the bodies (S).

2. Device according to claim 1, the device being arranged for carrying out quantitative phase imaging, preferably interferometric quantitative phase imaging.

3. Device according to one of the preceding claims, wherein the phase distribution map is used to obtain a focused optical image of the bodies (S), preferably using a Rayleigh-Sommerfeld propagator.

4. Device according to claim 3, wherein the focused optical image of the bodies (S) is used to obtain mechanical properties of the bodies (S).

5. Device according to one of the preceding claims, wherein the phase distribution map is used to obtain a dry mass density and/or the dry mass of the bodies (S).

6. Device according to one of the preceding claims, wherein the imaging means it uses is arranged to obtain the phase distribution map in real time as the bodies (S) are flowing through the channel (10).

7. Apparatus arranged for sorting bodies, the apparatus comprising a device according to one of the preceding claims and a means for sorting the bodies (S) according to data obtained by the analysis means (20).

8. Method of analysing bodies, preferably cells, suspended in a fluid, the comprising:

    - a step of allowing the fluid containing the bodies to flow in a microfluidic channel,
    - an imaging step to obtain optical information of the bodies as they are flowing through the channel,
    - an analysis step of using the optical information obtained by the imaging means to obtain a phase distribution map of the spatial distribution of the phase shift of light as it passes through the bodies.

9. Method according to claim 8, the method being arranged for carrying out quantitative phase imaging, preferably interferometric quantitative phase imaging.

10. Method according to one of claims 8 and 9, wherein the phase distribution map is used to obtain a focused optical image of the bodies, preferably using a Rayleigh-Sommerfeld propagator.

11. Device according to claim 10, wherein the focused optical image of the bodies is used to obtain mechanical properties of the bodies.

12. Device according to one of claims 8 to 11, wherein the phase distribution map is used to obtain a dry mass density or the dry mass of the bodies.

13. Device according to one of claims 8 to 12, wherein the imaging means uses is arranged to obtain the phase distribution map in real time as the bodies are flowing through the channel.

14. Method for sorting bodies, the apparatus comprising carrying out a method according to one of claims 8 to 13 and a subsequent step of sorting the bodies according to data obtained by the analysis step.

**Amended claims in accordance with Rule 137(2) EPC.**

1. Device for analysing bodies, preferably cells, suspended in a fluid, the device comprising:

    - a microfluidic channel (10) arranged for allowing the fluid containing the bodies (S) to flow therethrough,
    - an imaging means (16, 16') arranged so as to obtain optical information of the bodies as they are flowing through the channel,
    - an analysis means (20) which uses the optical information obtained by the imaging means (16, 16') to obtain a phase distribution map of the spatial distribution of the phase shift of light as it passes through the bodies (S), **characterized in that** the phase distribution map is used to obtain a dry mass density.

2. Device according to claim 1, the device being arranged for carrying out quantitative phase imaging, preferably interferometric quantitative phase imaging.

3. Device according to one of the preceding claims, wherein the phase distribution map is used to obtain a focused optical image of the bodies (S), preferably using a Rayleigh-Sommerfeld propagator.

4. Device according to claim 3, wherein the focused optical image of the bodies (S) is used to obtain mechanical properties of the bodies (S).

5. Device according to one of the preceding claims, wherein the phase distribution map is used to obtain the dry mass of the bodies (S).

6. Device according to one of the preceding claims, wherein the imaging means it uses is arranged to obtain the phase distribution map in real time as the bodies (S) are flowing through the channel (10).

7. Apparatus arranged for sorting bodies, the apparatus comprising a device according to one of the preceding claims and a means for sorting the bodies (S) according to data obtained by the analysis means (20).

8. Method of analysing bodies, preferably cells, suspended in a fluid, the method comprising:

- a step of allowing the fluid containing the bodies to flow in a microfluidic channel,
- an imaging step to obtain optical information of the bodies as they are flowing through the channel,
- an analysis step of using the optical information obtained by the imaging means to obtain a phase distribution map of the spatial distribution of the phase shift of light as it passes through the bodies, wherein the phase distribution map is used to obtain a dry mass density.

9. Method according to claim 8, the method being arranged for carrying out quantitative phase imaging, preferably interferometric quantitative phase imaging.

10. Method according to one of claims 8 and 9, wherein the phase distribution map is used to obtain a focused optical image of the bodies, preferably using a Rayleigh-Sommerfeld propagator.

11. Method according to claim 10, wherein the focused optical image of the bodies is used to obtain mechanical properties of the bodies.

12. Method according to one of claims 8 to 11, wherein the phase distribution map is used to obtain the dry mass of the bodies.

13. Method according to one of claims 8 to 12, wherein the imaging means used is arranged to obtain the phase distribution map in real time as the bodies are flowing through the channel.

14. Method for sorting bodies, the method comprising carrying out a method according to one of claims 8 to 13 and a subsequent step of sorting the bodies according to data obtained by the analysis step.

Fig. 1

A

sample    outlet

sheath flow

$$\text{Deformation} = 1 - \underbrace{\frac{2\sqrt{\pi\ \text{Area}}}{\text{Perimeter}}}_{\text{Circularity}}$$

10 µm

B

Underfocus    Slight Underfocus    In focus    Overfocus

Fig. 2

A

Focus control    Refocusing the collecting lens    20

S

Illumination

Microfluidic channel    Collecting Lens    Imaging optics (Interferometric or non-interferometric)    Camera    Phase Retrieval    Reconstruction of the focused image    Data Analysis

Hardware

10    14    16    18

B

S    21'

Laser Illumination

Microfluidic Channel    Objective Lens    Lens    Rochon Polarizer    Lens    Lens    Polarizer    Camera    16'

10'    12'    13'    15'    17'    19'

Fig. 3

```
        ┌─────────┐
        │  Start  │
        └────┬────┘
             │
             ▼
┌──────────────────────────────┐
│ Measure holograms by quantitative │ ───────── S10
│    phase imaging modalities    │
└──────────────┬───────────────┘
               │
               ▼
┌──────────────────────────────┐
│   Retrieve phase retardation from  │ ───────── S12
│  holograms by numerical calculation │
└──────────────┬───────────────┘
               │
               ▼
┌──────────────────────────────┐
│ Calculate axial defocusing distance and │ ───────── S14
│  dry mass of specimen from retrieved │
│        phase retardation        │
└──────────────┬───────────────┘
               │
               ▼
┌──────────────────────────────┐
│   Compensate defocusing distance in  │ ───────── S16
│           microscopes          │
└──────────────┬───────────────┘
               │
               ▼
        ┌─────────┐
        │   End   │
        └─────────┘
```

Fig. 4

Fig. 5

Europäisches Patentamt

European Patent Office

Office européen des brevets

**EUROPEAN SEARCH REPORT**

**Application Number**

**EP 24 19 0595**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IT 2021 0002 9372 A1 (FERRARO PIETRO [IT]; BIANCO VITTORIO [IT]; WANG ZHE [IT]) 19 May 2023 (2023-05-19) * paragraphs [0014], [0063], [0064] * ----- | 1-14 | INV. G01N15/01 G01N15/1433 G01N15/1434 G01N15/14 |
| X | ERAVUCHIRA PINKIE J. ET AL: "Individual sperm selection by microfluidics integrated with interferometric phase microscopy", METHODS, vol. 136, 1 March 2018 (2018-03-01), pages 152-159, XP055846591, NL ISSN: 1046-2023, DOI: 10.1016/j.ymeth.2017.09.009 * section 1 "Introduction", last paragraph; section 2.1 "Working principles of the integrated IPM-microfluidics platform"; section 2.5 "IPM system and OPD map acquisition"; section 3.3 "Semi-automatic sperm analysis using IPM", page 158, first complete paragraph; figure 1 * ----- | 1-14 | ADD. G01N15/10 |
| X | US 2020/284713 A1 (OTTO OLIVER [DE] ET AL) 10 September 2020 (2020-09-10) * paragraphs [0001], [0016], [0053], [0069]; figure 1 * ----- -/-- | 1-14 | |

**TECHNICAL FIELDS SEARCHED (IPC)**

G01N

The present search report has been drawn up for all claims

| Place of search | Date of completion of the search | Examiner |
|---|---|---|
| The Hague | 2 January 2025 | Eidmann, Gunnar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 19 0595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YU XIAO ET AL: "Review of digital holographic microscopy for three-dimensional profiling and tracking", OPTICAL ENGINEERING, SOCIETY OF PHOTO-OPTICAL INSTRUMENTATION ENGINEERS, 1000 20TH ST. BELLINGHAM WA 98225-6705 USA, vol. 53, no. 11, 3 April 2014 (2014-04-03), page 112306, XP060048121, ISSN: 0091-3286, DOI: 10.1117/1.OE.53.11.112306 [retrieved on 2014-04-03] * section 3.3 "Rayleigh-Sommerfeld Backpropagation Method; section 4.3.1 "Red blood cells", second paragraph * | 3,4,10, 11 | |

-----

TECHNICAL FIELDS
SEARCHED (IPC)

The present search report has been drawn up for all claims

| Place of search | Date of completion of the search | Examiner |
|---|---|---|
| The Hague | 2 January 2025 | Eidmann, Gunnar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 0595

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2025

| Patent document cited in search report | Publication date | Patent family member(s) | | Publication date |
|---|---|---|---|---|
| IT 202100029372 A1 | 19-05-2023 | ---------------------------------- | | |
| US 2020284713 A1 | 10-09-2020 | DE 102017008946 A1 | | 28-03-2019 |
| | | EP 3685143 A1 | | 29-07-2020 |
| | | US 2020284713 A1 | | 10-09-2020 |
| | | WO 2019057894 A1 | | 28-03-2019 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015024690 A1

### Non-patent literature cited in the description

- **URBANSKA et al.** *Methods in Cell Biology*, 2018, vol. 147, 175-198
- **PARK et al.** Quantitative phase imaging in biomedicine. *Nature Photonics*, 2018, vol. 12, 578-589
- **BON et al.** Quadriwave lateral shearing interferometry for quantitative phase microscopy of living cells. *Optics Express*, 2009, vol. 17 (15)
- **BON et al.** Optical detection and measurement of living cell morphometric features with single-shot quantitative phase microscopy. *Journal of Biomedical Optics*, 2012, vol. 17 (7)
- **XIAO et al.** Quantitative phase deformability cytometry for noninvasive high-throughput characterization of cells. *View*, 2023, vol. 4, 20220049
- **LEE** ; **GRIER**. Holographic microscopy of holographically trapped three-dimensional structures. *Optics Express*, 2007, vol. 15 (4), 1505-1512
- **KIM** ; **PARK**. Fourier transform light scattering angular spectroscopy using digital inline holography. *Optics Letters*, 2012, vol. 37 (19), 4161-4163
- **OH et al.** Non-interferometric stand-alone single-shot holographic camera using reciprocal refractive imaging. *Nature Communications*, 2023, vol. 14, 4870
- **BAEK et al.** White-light quantitative phase imaging unit. *Optica*, 2019, vol. 6 (45)
- **PHILLIPS, K. et al.** *Phys. Rev. Lett.*, 2012, vol. 109, 118105
- **J. HAO et al.** *Opt. Express*, 2020, vol. 28, 25795-25805
- **J. OH et al.** *Nat. Comm*, 2023, vol. 14, 4870
- **S. SHIN et al.** *Phys. Rev. Applied*, 2018, vol. 9, 044042
- **FOURIER**. transform light scattering angular spectroscopy using digital inline holography. *Optics Letters*, 2012, vol. 37 (19), 4161-4163
- **N. OTSU**. A Threshold Selection Method from Gray-Level Histograms. *IEEE Trans. Syst. Man. Cybern.*, 1979, vol. 9, 62-66
- **BHADURI et al.** Diffraction phase microscopy with white light. *Optics Letters*, 2012, vol. 37 (6)